# EUROPÄISCHE PATENTANMELDUNG

(11) **EP 0 598 360 A2**
(43) Veröffentlichungstag der Anmeldung: **25.05.1994**
(21) Anmeldenummer: 93118372.7
(22) Anmeldetag: 12.11.1993
(51) Int. Cl.: G01F 1/05

(54) **Lagerung für das Flügelrad eines Wasserzählers**

(30) Priorität: 16.11.1992 DE 9215501 U
(71) Anmelder: SAMECO MESSTECHNIK GmbH, D-10627 Berlin (DE)
(72) Erfinder: Dobeneck, Wolfgang, D-99974 Mühlhausen (DE); Lang, Heinz-Günter, D-99986 Oberdorla (DE); Günttert, Norbert, D-99974 Mühlhausen (DE); Leipold, Jörg, D-99974 Mühlhausen (DE)
(74) Vertreter: Brose, D. Karl, Dipl.-Ing.

(57) **Zusammenfassung**

Zur Verbesserung der Genauigkeit von Wasserzählern wird eine Lagerung für ein Flügelrad (2) eines Wasserzählers beschrieben, das Flügelrad (2) auf einem Stift (4) gelagert ist, der in einer im Flügelrad befestigten Buchse (3) läuft, wobei die Buchse (3) geschlossen ausgebildet ist, und dadurch auch die axiale Lagerung des Stiftes (4) bewirkt, und aus mit Kohlefasern verstärktem Polyamid hergestellt ist.

## Beschreibung

Die Flügelräder von Wasserzählern dienen dazu, die Menge des durch den Wasserzähler fließenden Wassers in entsprechende Umdrehungszahlen umzusetzen. Die Meßgenauigkeit eines Wasserzählers ist daher stets davon abhängig, wie genau das Flügelrad arbeitet. Hierbei ist die Lagerung des Flügelrades von besonderer Bedeutung für die Genauigkeit der Messung des Wasserzählers.

Gemäß dem Stand der Technik wurde diese Lagerung des Flügelrades aus Stift, Buchse und Deckstein gebildet. Eine solche Lagerung ist jedoch für hohe Genauigkeitsklassen nicht hinreichend und unterliegt insbesondere einer starken Abnutzung. Da die Auswertung, insbesondere bei Wasserzählern, die mit energiebewertenden Geräten gekoppelt sind, dank der Elektronik immer genauer wird, ist nunmehr der mechanische Teil, insbesondere die Lagerung des Flügelrades der begrenzende Faktor für die Genauigkeit von Wasserzählern und energiebewertenden Geräten.

Es ist daher Aufgabe der vorliegenden Erfindung, eine Lagerung für das Flügelrad eines Wasserzählers zu schaffen, die eine wesentlich höhere Güte und eine deutlich höhere Standzeit und Haltbarkeit im Vergleich zu herkömmlichen Lagerung aufweist.

Erfindungsgemäß wird diese Aufgabe dadurch gelöst, daß eine geschlossene Buchse vorgesehen wird, die aus mit Kohlefasern verstärktem Polyamid besteht. Dadurch übernimmt die Buchse gleichzeitig die axiale Lagerung des Stiftes. Der Deckstein kann entfallen, wodurch auch eine Vereinfachung der Fertigung erreicht wird.

Besonders bevorzugt ist es dabei, die Oberfläche der Buchse an den Stellen, die mit dem Stift in Berührung kommen, als Spritzhaut auszubilden. Dadurch wird die Standfestigkeit der Lagerung noch weiter erhöht.

Erfindungsgemäß werden sich mit der neuen Lagerung elektronische Wasserzähler der Genauigkeitsklasse C für den horizontalen Betrieb und der Klasse B für den vertikalen Betrieb in einer Massenproduktion kostengünstig herstellen lassen.

Mit einer erfindungsgemäßen Lagerung des Flügelrades wird sich auch die Genauigkeit und die Standzeit von mechanischen Wasserzählern verbessern lassen.

Gemäß einer Ausführungsform der Erfindung findet ein normales Flügelrad mit Lagerstiften Verwendung. Zur Lagerung dieser Stifte sind jedoch an ihren Enden geschlossene Buchsen aus mit Kohlefasern verstärktem Polyamid vorgesehen. Diese Buchsen übernehmen damit auch die axiale Lagerung des Stiftes. Ein Deckstein für die Lagerung wird nicht mehr benötigt.

Um zu einer besonders hohen Haltbarkeit zu gelangen, wird die Oberfläche der Buchse an den Stellen, die mit dem Stift in Berührung kommen, als Spritzhaut ausgebildet.

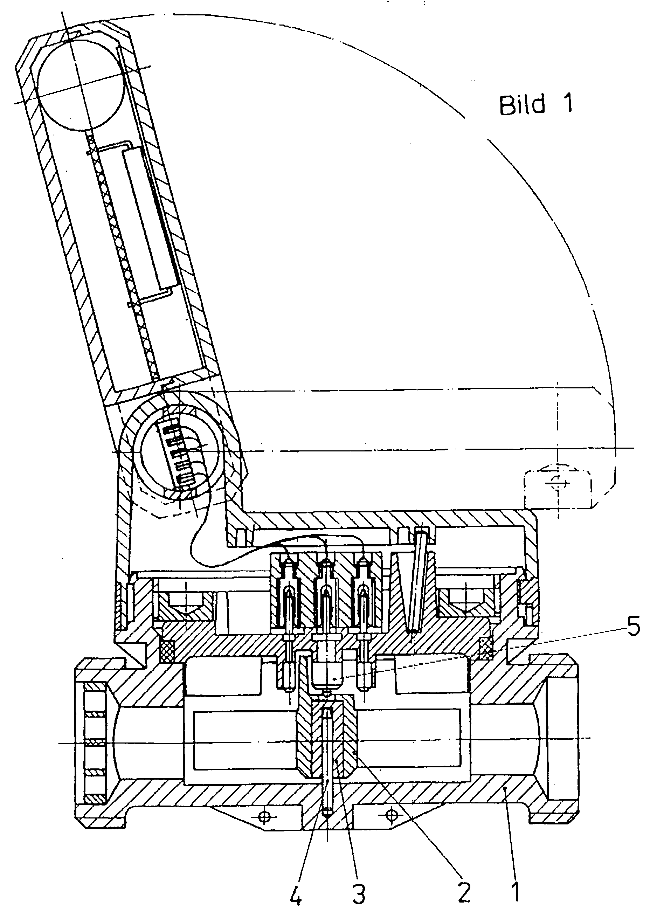

**Bild 1** zeigt eine Schnittdarstellung eines elektronischen Wasserzählers, der mit einem Flügelrad mit erfindungsgemässer Lagerung ausgestattet ist.

Der beschriebene erfindungsgemäße Wasserzähler besitzt ein Wasserzählergehäuse 1, welches hier senkrecht und in Flußrichtung des Wassers geschnitten dargestellt ist. Das Wasser fließt dabei in der Zeichnung von links nach rechts. In diesem Wasserzählergehäuse 1 ist ein Flügelrad 2 gelagert. In dem Flügelrad ist eine Lagerbuchse 3 aus kohlefaserverstärktem Polyamid von unten in eine zentrale Ausnehmung eingesetzt. Die Lagerbuchse ist als Spritzgießteil gefertigt, wobei die Oberfläche der Buchse an den Stellen, die mit dem Stift in Berührung kommen, als Spritzhaut ausgebildet ist.

Diese Lagerbuchse 3 ist fest in das Flügelrad 2 eingesetzt und sitzt drehbar auf dem Lagerstift 4, wobei dieser auch am oberen Ende an der Lagerbuchse anliegt, wodurch eine Axiallagerung geschaffen wird. Die weitere Axiallagerung des Flügelrads 2 erfolgt durch die Mittelelektrode 5 des elektrischen Umdrehungsaufnehmers. Die Mittelelektrode 5 ist mit einer Lagerspitze versehen, die nach unten zeigt, und die zweite axiale Lagerstelle des Flügelrades 2 bildet.

### Zeichenerklärung zu Bild 1

1 Wasserzählergehäuse
2 Flügelrad
3 Lagerbuchse; Spritzgießteil aus kohlefaserverstärktem Polyamid
4 Lagerstift
5. Mittelektrode mit Lagerspitze für die zweite axiale Lagerstelle des Flügelrades

## Patentansprüche

1. Lagerung für ein Flügelrad (2) eines Wasserzählers, wobei das Flügelrad (2) auf einem Stift (4) gelagert ist, der in einer im Flügelrad (2) befestigten Buchse läuft, **dadurch gekennzeichnet**, daß die Buchse (3) geschlossen ausgebildet ist, und dadurch auch die axiale Lagerung des Stiftes (4) bewirkt, und daß die Buchse (3) aus mit Kohlefasern verstärktem Polyamid hergestellt ist.

2. Lagerung nach Anspruch 1, dadurch gekennzeichnet, daß die Oberfläche der Buchse (3) an den Stellen, die mit dem Stift (4) in Berührung kommen, als Spritzhaut ausgebildet ist.
